# FASCICULE DE BREVET EUROPEEN

(11) **EP 4 171 331 B1**
(45) Date de publication et mention de la délivrance du brevet: **11.09.2024**
(21) Numéro de dépôt: 21751600.4
(22) Date de dépôt: 23.06.2021
(51) Int. Cl.: A47J 36/02, A47J 36/04, B05D 5/08

(54) **ARTICLE CULINAIRE AVEC UN REVETEMENT EXTERIEUR ANTI-GLISSE**
KÜCHENARTIKEL MIT RUTSCHHEMMENDER AUSSENBESCHICHTUNG
CULINARY ARTICLE WITH AN ANTI-SLIP OUTER COATING

(30) Priorité: 25.06.2020 FR 2006682
(43) Date de publication de la demande: 03.05.2023
(73) Titulaire: SEB S.A., 69130 Ecully (FR)
(72) Inventeur: LE BONNEC, Marie, 69134 Ecully Cedex (FR)
(74) Mandataire: Regimbeau
(86) Numéro de dépôt international: PCT/FR2021/051151
(87) Numéro de publication internationale: WO 2021/260326

(56) Documents cités:
- EP-A1- 0 672 497
- EP-A1- 0 672 497
- EP-A1- 2 596 726
- EP-A1- 2 596 726
- WO-A1-2011/086276
- WO-A1-2011/086276
- FR-A1- 3 014 014
- FR-A1- 3 014 014
- FR-A3- 2 594 673
- FR-A3- 2 594 673

## Description

### DOMAINE TECHNIQUE

La présente invention concerne un article culinaire présentant sur sa face externe, un revêtement aux propriétés anti-glisse améliorées. La présente invention concerne aussi le procédé de fabrication d'un tel article.

### TECHNIQUE ANTERIEURE

Avec le développement des plaques de cuisson en verre, à induction et vitrocéramiques, ayant une surface lisse et glissante, des problématiques de sécurité se posent. Le problème majeur vient du glissement des articles culinaires disposés sur les feux, en-dehors de la plaque de cuisson, avec le risque pour l'utilisateur de renverser le contenu de l'article culinaire, de se blesser voire de se brûler.

De plus, les revêtements extérieurs des articles culinaires sont majoritairement composés de PTFE, et présentent l'inconvénient de favoriser le glissement sur les plaques de cuisson, augmentant les risques d'accident. Par favoriser le glissement, on désigne l'aptitude conférée à l'article culinaire de ne pas rester en position sur le foyer chauffant. Cette propriété est liée aux coefficients de glissement statique et dynamique de la couche en contact avec ledit foyer, donc avec les plaques de cuisson. Pour des raisons de sécurité cette sensibilité à la glisse doit être minimisée.

Selon le mode d'application du revêtement extérieur, des techniques ont été mises en place par les fabricants d'articles culinaires pour limiter ce phénomène.

En sérigraphie, un bandeau métallique est laissé non revêtu, sur le fond de l'article au niveau de la portée. Cette partie en aluminium non revêtu permet de limiter la glisse mais l'efficacité est très dépendante de la concavité de la pièce. De plus, ce bandeau métallique a tendance à tâcher les plaques vitrocéramiques.

Lors de l'application par rouleau ou en spray, un décor extérieur à base de PTFE et d'alumine est appliqué sous les 2 dernières couches de finish rouleau. Cette couche présente un effet antiglisse mais a l'inconvénient de rayer les plaques de cuisson.

D'autres matériaux, comme le silicone, sont également utilisés pour apporter la propriété antiglisse. Malheureusement ces matières ne résistent pas aux températures d'usage des articles culinaires, par exemple pour des cuissons continues supérieures à 200°C.

Un article culinaire comprenant un revêtement externe antiadhésif, comportant un décor au niveau du fond externe est connu du document WO 2011/086276 A1.

Il existe donc un besoin de proposer des articles culinaires limitant le phénomène de glissement, notamment lorsqu'ils sont disposés sur des surfaces lisses, comme les plaques de cuisson, afin d'éviter les accidents domestiques, tout en évitant les rayures et le tâchage du support sur lequel lesdits articles sont posés.

### EXPOSE DE L'INVENTION

Pour remédier aux inconvénients présentés ci-dessus, la Demanderesse a développé un article culinaire recouvert sur sa face extérieure d'un revêtement anti-glisse, afin de limiter le glissement dudit articles sur les plaques de cuisson, tout en diminuant voire en supprimant, les rayures et les tâches au niveau du support sur lequel l'article est posé. La Demanderesse a aussi développé un procédé de fabrication dudit article culinaire.

Un premier objet de l'invention concerne un article culinaire 1 comprenant un support 2 présentant une paroi de fond 21 et une paroi latérale 31 s'élevant autour de la paroi de fond 21, ladite paroi de fond 21 présentant une face interne 211 destinée à recevoir des aliments et une face externe 212 destinée à être disposée à proximité d'une source de chaleur et ladite paroi latérale 31 présentant une face interne 311 et une face externe 312 caractérisé en ce que :
- les faces externes 212 et 312 sont recouvertes d'au moins une couche primaire continue comprenant au moins un polymère fluorocarboné ;
- le revêtement de la face externe 212 comprend, agencé entre ou dans ses couches, au moins un décor représentant au moins 20 % de la surface de la face externe 212, lequel décor comprend :
   - au moins un polymère fluorocarboné ;
   - au moins une résine polymère ;
   - entre 5 et 25 % en poids de charges minérales et/ou de charges polymères, sous forme de particules de taille d50 inférieure à 25 µm.

Un autre objet de l'invention concerne un procédé de fabrication d'un article culinaire selon l'invention, comprenant un support 2 présentant une paroi de fond 21 et une paroi latérale 31 s'élevant autour de la paroi de fond 21, ladite paroi de fond 21 présentant une face interne 211 destinée à recevoir des aliments et une face externe 212 destinée à être disposée à proximité d'une source de chaleur et ladite paroi latérale 31 présentant une face interne 311 et une face externe 312, ledit procédé comprenant les étapes suivantes :
- Fourniture d'un support 2 ;
- Application d'au moins une couche primaire comprenant au moins un polymère fluorocarboné, sur les faces externes 212 et 312 du support 2 ;
- Application sur au moins 20 % de la surface de la face externe 212 d'au moins un décor comprenant au moins un polymère fluorocarboné, au moins une résine polymère et 5 à 25 % en poids de charges minérales et/ou polymères, sous forme de particules de taille d50 inférieure à 25 µm ;
- Cuisson dudit article culinaire au four à une température comprise entre 400 et 450°C, pendant 1 à 15 min.

### DEFINITIONS

Par le terme « couche », on entend au sens de la présente invention une couche continue ou discontinue. Une couche continue (ou appelée également couche monolithique) est un tout unique formant un aplat total recouvrant complètement la surface sur laquelle elle est posée. Une couche discontinue (ou couche non monolithique) peut comprendre plusieurs parties n'étant pas ainsi un tout unique.

On entend par les termes « couche primaire », « couche d'accroche » ou « primaire d'accroche » toutes les couches de la première couche appliquée directement sur le support, éventuellement préparé mécaniquement ou traité par une sous-couche (il est préférable que cette couche soit bien adhérente au support et apporte toutes ses propriétés mécaniques au revêtement : dureté, résistance à la rayure) à la dernière couche avant la première couche de décor.

On entend par les termes « couche intermédiaire » toute couche entre les couches primaires et les couches de finition.

On entend, au sens de la présente invention par les termes « décor » ou « couche de décor », une ou plusieurs couches continues ou discontinues comprenant des charges minérales et/ou polymères. Un décor est visible pour l'utilisateur distinctement à l'œil nu et à distance classique d'utilisation de l'article ménager, du fait de la présence de pigment(s) et/ou de la présence de charge(s) créant un relief, une rugosité, visible à l'œil nu.

On entend par les termes « couche de finition » ou « finish » une couche de surface continue et transparente, cette couche laissant une visibilité parfaite des couches sous-jacentes tout en les protégeant d'agressions mécaniques et conférant au revêtement ses propriétés antiadhérentes. Les couches de finition sont les couches appliquées en dernier.

Par l'expression « article culinaire », il faut comprendre au sens de la présente invention un objet destiné à cuisiner. Pour ce faire, il est destiné à recevoir un traitement thermique.

Par l'expression « objet destiné à recevoir un traitement thermique », il faut comprendre au sens de la présente invention un objet qui sera chauffé par un système extérieur de chauffage, tels que des poêles, des casseroles, des sauteuses, des woks, des crêpières, des faitouts, des marmites, des cocottes, des braisières, des daubières, des grilles de barbecues, des moules à pâtisserie, des caquelons et qui est apte à transmettre l'énergie calorifique apportée par ce système extérieur de chauffage à un matériau ou aliment au contact dudit objet.

On entend par « particules » des éléments de petite taille de forme aléatoire, caractérisés en particulier par leur d50.

Par « d50 », on entend, au sens de la présente invention, la dimension telle que 50 % en volume de la population est constitué de particules de taille inférieure à ladite dimension (médiane de la répartition particulaire). On entend par le terme « taille », le diamètre équivalent, soit le diamètre qu'aurait la sphère théorique se comportant de la même manière que la particule considérée.

### Brève description des figures

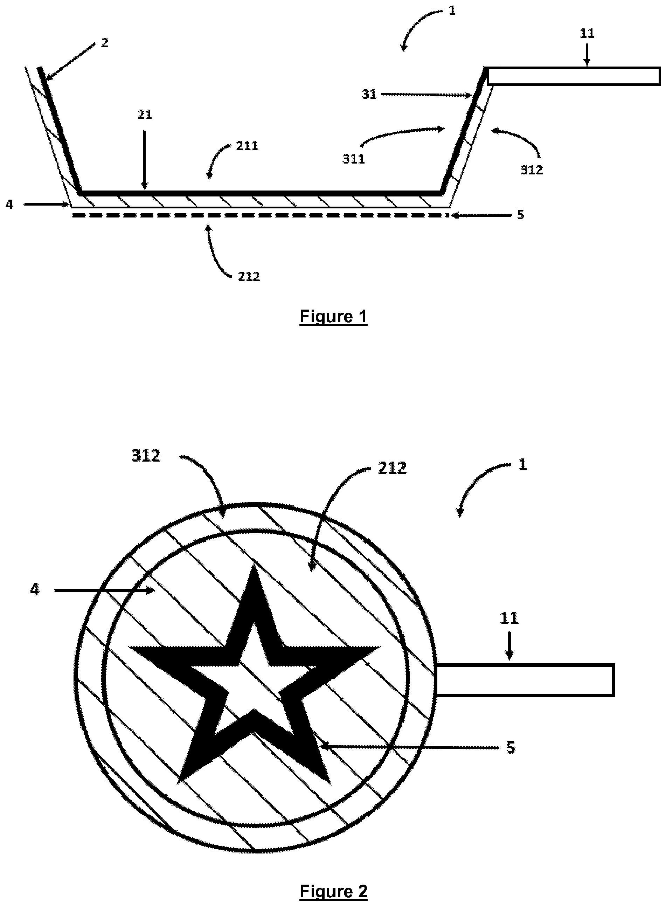

La figure 1 représente une vue schématique d'un article culinaire conforme à l'invention.

Cette figure représente en particulier, à titre d'exemple d'article culinaire une poêle 1 avec une poignée de préhension 11, qui comprend un support 2 présentant une paroi de fond 21 et une paroi latérale 31 s'élevant autour de la paroi de fond 21, ladite paroi de fond 21 présentant une face interne 211 destinée à recevoir des aliments et une face externe 212 destinée à être disposée à proximité d'une source de chaleur et ladite paroi latérale 31 présentant une face interne 311 et une face externe 312.

Les faces externes 212 et 312 sont recouvertes d'au moins une couche primaire 4 continue comprenant au moins un polymère fluorocarboné et le revêtement de la face externe 212 comprend, agencé entre ou dans ses couches, au moins un décor 5.

La figure 2 représente une vue schématique des faces externes 212 et 312 d'un article culinaire conforme à l'invention.

Cette figure représente à titre d'exemple d'article culinaire, une poêle 1 avec une poignée de préhension 11, dont les faces externes 212 et 312 sont recouvertes d'au moins une couche primaire 4 et dont la face externe 212 est revêtu d'un décor 5.

### DESCRIPTION DETAILLEE

Un premier objet de l'invention concerne un article culinaire 1 comprenant un support 2 présentant une paroi de fond 21 et une paroi latérale 31 s'élevant autour de la paroi de fond 21, ladite paroi de fond 21 présentant une face interne 211 destinée à recevoir des aliments et une face externe 212 destinée à être disposée à proximité d'une source de chaleur et ladite paroi latérale 31 présentant une face interne 311 et une face externe 312 caractérisé en ce que :
- les faces externes 212 et 312 sont recouvertes d'au moins une couche primaire continue comprenant au moins un polymère fluorocarboné ;
- le revêtement de la face externe 212 comprend, agencé entre ou dans ses couches, au moins un décor représentant au moins 20% de la surface de la face externe 212, lequel décor comprend :
   - Au moins un polymère fluorocarboné ;
   - Au moins une résine polymère ;
   - entre 5 et 25 % en poids de charges minérales et/ou de charges polymères, sous forme de particules de taille d50 inférieure à 25 µm.

De manière avantageuse, l'article est un article culinaire dont l'une des faces du support constitue une face interne concave destinée à être en contact avec des aliments placés à l'intérieur dudit article et l'autre face du support de l'article est une face externe convexe destinée à être en contact avec une source de chaleur.

L'article culinaire selon l'invention est de préférence choisi dans le groupe constitué de casserole, poêle, fait-tout, wok, sauteuse, crêpière, marmite, et cocotte.

Dans les domaines d'applications envisagées pour la présente invention, un article à chauffer du type article culinaire est typiquement utilisé dans une gamme de températures comprise entre 10°C et 300°C.

Le support comprend au moins un élément choisi parmi une céramique, un verre, un stellite, un alliage métallique ou un métal, notamment l'aluminium, le cuivre, le titane ou le zirconium. Le support est préférentiellement métallique.

A titre de supports métalliques utilisables dans le cadre de la présente invention pour des articles culinaires, on peut notamment citer les supports présentant :
- une structure monocouche en aluminium anodisé ou non, ou en aluminium poli, brossé, sablé ou microbillé, traité chimiquement, ou en fonte d'aluminium, ou en acier poli, brossé, sablé ou microbillé, ou en acier inoxydable poli, brossé, sablé ou microbillé, ou en fonte d'acier, d'aluminium ou de fer, ou en cuivre éventuellement martelé ou poli ; ou
- une structure multicouche, en partie ou en totalité, comprenant de l'extérieur vers l'intérieur les couches suivantes acier inoxydable/aluminium/acier inoxydable ou encore acier inoxydable/aluminium/cuivre/aluminium/acier inoxydable, ou encore une calotte d'aluminium de fonderie, d'aluminium ou d'alliages d'aluminium doublée d'un fond extérieur en acier inoxydable.

Pour une meilleure adhérence du revêtement, la surface du support peut être traitée de façon à augmenter sa surface spécifique par exemple par sablage.

Les faces externes 212 et 312 de la paroi de fond 21 de l'article culinaire, sont recouvertes d'au moins une couche de primaire. Dans le cas où l'application de la couche de primaire est réalisée sur un article culinaire préformé, les faces externes 212 et 312 de la paroi de fond 21 sont recouvertes préférentiellement d'une seule couche de primaire. Dans le cas où l'application de la couche de primaire est réalisée sur un article culinaire non préformé, sous-forme plate, les faces externes 212 et 312 de la paroi de fond 21 sont recouvertes préférentiellement de deux couches de primaire.

Avantageusement, l'épaisseur de chaque couche de primaire est inférieure à 20 µm, préférentiellement inférieure ou égale à 15 µm.

De préférence, l'épaisseur de la première couche primaire est comprise entre 5 et 15 µm, de manière particulièrement préférée elle est de 10 µm.

De préférence, l'épaisseur de la deuxième couche primaire est comprise entre 10 et 20 µm, de manière particulièrement préférée elle est de 15 µm.

Dans le cas où il y a plusieurs couches de primaires, au moins l'une d'entre elle est continue. Dans le cas où il n'y a qu'une seule couche de primaire, celle-ci est continue.

Le polymère fluorocarboné peut être choisi dans le groupe comprenant le polytétrafluoroéthylène (PTFE), le PTFE modifié, les copolymères de tétrafluoroéthylène et de perfluoropropylvinyléther (PFA), les copolymères de tétrafluoroéthylène et d'hexafluoropropène (FEP), le polyfluorure de vinylidène (PVDF), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), l'éthylène tétrafluoroéthylène (ETFE), et leurs mélanges.

Avantageusement, le polymère fluorocarboné peut être choisi parmi le polytétrafluoroéthylène (PTFE), ou un mélange de PTFE et de PFA (PTFE/PFA), ou un mélange de PTFE et de FEP (PTFE/FEP), ou un mélange de PTFE, de PFA et de FEP (PTFE/PFA/FEP).

De manière particulièrement préférée, le polymère fluorocarboné est le PTFE.

Avantageusement, la proportion de polymère(s) fluorocarboné(s) dans chaque couche de primaire est comprise entre 30 % et 80 %, préférentiellement entre 40 % et 70 % en poids sec par rapport au poids total de ladite couche de primaire.

La ou les couche(s) primaire(s) peuvent comprendre une résine d'accroche, en particulier quand le support a subi un traitement mécanique.

De préférence, la ou les résine(s) d'accroche est(sont) choisie(s) dans le groupe constitué de polyamide imides (PAI), polyether imides (PEI), polyamides (PA), polyimides (PI), polyethercétones (PEK), polyetherethercétones (PEEK), polyarylethercétones (PAEK), polyethersulphones (PES), and polyphenylene sulfide (PPS), polybenzimidazoles (PBI), tanins.

Le décor représente au moins 20 % de la surface de la face externe 212 de la paroi de fond 21, préférentiellement le décor représente au moins 30 %, encore plus préférentiellement au moins 30 %.

De manière avantageuse, le décor représente moins de 50 % de la surface de la face externe 212 de la paroi de fond 21, encore plus avantageusement le décor représente moins de 40 %.

Le décor comprend au moins un polymère fluorocarboné choisi dans le groupe comprenant le polytétrafluoroéthylène (PTFE), le PTFE modifié, les copolymères de tétrafluoroéthylène et de perfluoropropylvinyléther (PFA), les copolymères de tétrafluoroéthylène et d'hexafluoropropène (FEP), le polyfluorure de vinylidène (PVDF), les copolymères de tétrafluoroéthylène et de polyméthylvinyléther (MVA), les terpolymères de tétrafluoroéthylène, de polyméthylvinyléther et de fluoroalkylvinyléther (TFE/PMVE/FAVE), l'éthylène tétrafluoroéthylène (ETFE), et leurs mélanges.

Avantageusement, le polymère fluorocarboné de la couche de décor peut être choisi parmi le polytétrafluoroéthylène (PTFE), ou un mélange de PTFE et de PFA (PTFE/PFA), ou un mélange de PTFE et de FEP (PTFE/FEP), ou un mélange de PTFE, de PFA et de FEP (PTFE/PFA/FEP).

De manière particulièrement préférée, le polymère fluorocarboné de la couche de décor est le PTFE.

Avantageusement, la proportion de polymère(s) fluorocarboné(s) dans la couche de décor est comprise entre 30 % et 80 %, préférentiellement entre 40 % et 70 % et encore plus préférentiellement entre 30 % et 60 % en poids sec par rapport au poids total de ladite couche de décor.

Le décor comprend au moins une résine polymère choisie parmi les polyamides imides (PAI), les polyéthers imides (PEI), les polyamides (PI), les polyéthercétones (PEK), les polyétheréthercétones (PEEK), les polyéthersulfures (PES), les sulfures de polyphénylène (PPS), et leurs mélanges. Préférentiellement, la résine polymère est choisie parmi les polyamides imides (PAI).

Préférentiellement, la proportion de résine(s) polymère(s) dans la couche de décor est comprise entre 0,5 % et 3 %, de préférence entre 1 % et 1,5 %, en poids sec par rapport au poids total de ladite couche de décor.

Avantageusement, le décor comprend un ratio entre la résine polymère et le polymère fluorocarboné compris entre 1,5 et 5, de préférence 2.

Avantageusement, l'épaisseur de chaque couche de décor est inférieure à 20 µm, préférentiellement inférieure ou égale à 15 µm, encore plus préférentiellement inférieure ou égale à 10 µm.

Selon un mode de réalisation, le décor comprend des charges minérales sélectionnées parmi le verre, l'inox, l'alumine, le nitrure de bore, le talc, le kaolin, ou leurs mélanges.

Selon un autre mode de réalisation, le décor comprend des charges polymères sélectionnées parmi les polyaryléthercétones, les polyimides, les polysulfures de phénylène et leurs mélanges.

Le décor peut comprendre un mélange de charges minérales et de charges polymères.

Le décor comprend entre 5 et 25 % en poids, préférentiellement entre 10 et 20 % en poids de charges minérales et/ou de charges polymères.

Les charges minérales et/ou les charges polymères sont sous forme de particules de taille d50 inférieure à 25 µm, préférentiellement de taille d50 inférieure à 20 µm.

Préférentiellement, les charges minérales et/ou les charges polymères sont sous forme de particules de taille d50 supérieure à 5 µm, préférentiellement de taille d50 supérieure à 10 µm.

Avantageusement, les charges minérales et/ou les charges polymères sont de forme sphérique.

La taille, et donc le d50, ainsi que la concentration des charges dans la couche de décor peuvent être évaluées en réalisant une observation au microscope électronique.

Préférentiellement, les charges minérales et les charges polymères ont une dureté sur l'échelle de Mohs inférieure ou égale à 5,5. L'échelle de Mohs permettant de mesurer la dureté des minéraux est une échelle nominale. La mesure de la dureté sur l'échelle de Mohs se base donc sur la capacité d'un minéral à rayer un deuxième minéral. Les minéraux ayant une dureté sur l'échelle de Mohs inférieure ou égale à 5,5 (valeur correspondant à la dureté sur l'échelle de Mohs du verre de vitre), peuvent donc être rayés par tout minéral ayant une dureté sur l'échelle de Mohs supérieure à 5,5, tel que l'ortose (dureté sur l'échelle de Mohs de 6).

De manière avantageuse, le décor peut comprendre un ou plusieurs pigments, comme par exemple le dioxyde de titane, l'oxyde de fer II (FeO), l'oxyde de fer III (Fe₂O₃), le noir de carbone, le rouge de pyralène, les paillettes métalliques, les oxydes mixtes de cobalt et de manganèse, les pigments bleus à base de mica et d'oxyde de titane et leurs mélanges.

De manière préférée, le décor peut comprendre des additifs tels que des agents dispersants, des agents d'étalement, des anti-mousses, des agents épaississants.

Le décor peut être positionné entre deux couches de primaires ou sur la dernière couche de primaire.

Préférentiellement, la couche de décor est discontinue.

Avantageusement, la couche de décor est rugueuse, présentant des aspérités dues à la présence de charges minérales et/ou de charges polymères. De manière avantageuse, la couche de décor est visible à l'œil nu.

De manière préférentielle, la dernière couche de décor est en contact avec la source de chaleur.

Selon un mode de réalisation, une ou plusieurs couches de finition sont appliquée(s) sur la dernière couche intermédiaire ou sur la dernière couche de primaire. Préférentiellement, la ou les couches de finition comprennent) une ou plusieurs polymère(s) fluorocarbonée(s).

Avantageusement, la ou les couches de finition comprennent) une ou plusieurs résine(s) thermostable(s).

De manière préférée, la ou les couche(s) de finition appliquées sur le fond de l'article culinaire sont transparentes.

Préférentiellement, la ou les couche(s) de finition sont continues.

Un autre objet de l'invention concerne un procédé de fabrication d'un article culinaire comprenant un support (2) présentant une paroi de fond (21) et une paroi latérale (31) s'élevant autour de la paroi de fond (21), ladite paroi de fond (21) présentant une face interne (211) destinée à recevoir des aliments et une face externe (212) destinée à être disposée à proximité d'une source de chaleur et ladite paroi latérale (31) présentant une face interne (311) et une face externe (312), ledit procédé comprenant les étapes suivantes :
- Fourniture d'un support (2) ;
- Application d'au moins une couche de primaire comprenant au moins un polymère fluorocarboné, sur les faces externes (212) et (312) du support (2) ;
- Application sur au moins 20 % de la surface de la face externe (212) d'au moins un décor comprenant au moins un polymère fluorocarboné, au moins une résine polymère et 5 à 25 % en poids de charges minérales et/ou de charges polymères, sous forme de particules de taille d50 inférieure à 25 µm ;
- Cuisson dudit article culinaire au four à une température comprise entre 400 et 450°C, pendant 1 à 15 min.

Préférentiellement, le support peut subir un traitement de surface afin d'améliorer l'accroche de la ou des couche(s) de primaire(s), tel qu'un traitement chimique (décapage) ou un traitement mécanique, par exemple par sablage ou par brossage. De manière avantageuse, le traitement de surface peut être suivi d'une étape de dégraissage et/ou dépoussiérage.

Le support peut aussi subir une étape de microbillage de la face externe 212 de la paroi de fond 21.

L'application de la ou des couche(s) de primaire peut être réalisée par toute méthode bien connue de l'homme du métier telle que par spray, par rouleau, par sérigraphie, par rideau ou par tampographie.

Lorsque l'application d'une couche de primaire est réalisée par sérigraphie ou au rouleau, une étape de séchage est réalisée.

Optionnellement, cette étape de séchage peut également être effectuée après l'application d'une couche de primaire par pulvérisation.

L'étape de séchage permet de limiter, voire d'éliminer, la génération de défauts, telles que des bulles ou des fissures, dans le revêtement lors de l'étape de cuisson.

Lorsque l'application d'une couche de primaire est réalisée par sérigraphie, une étape de refroidissement est réalisée après l'étape de séchage.

Optionnellement, cette étape de refroidissement peut également être effectuée après l'étape de séchage de la couche de primaire lorsque l'application se fait au rouleau ou par pulvérisation.

Avantageusement, l'étape de refroidissement permet d'éviter un séchage trop rapide de la nouvelle couche et un phénomène de poudrage (le produit liquide séché se présente sous forme de poudre).

L'application de la ou des couche(s) de décor peut être réalisé par toute méthode bien connue de l'homme du métier telle que par spray, par rouleau, par sérigraphie, par rideau ou par tampographie.

Lorsque l'application d'une couche de décor est réalisée par sérigraphie ou au rouleau, une étape de séchage est réalisée.

Optionnellement, cette étape de séchage peut également être effectuée après l'application d'une couche de décor par pulvérisation.

L'étape de séchage permet de limiter, voire d'éliminer, la génération de défauts, telles que des bulles ou des fissures, dans le revêtement lors de l'étape de cuisson.

Lorsque l'application d'une couche de décor est réalisée par sérigraphie, une étape de refroidissement est réalisée après l'étape de séchage.

Optionnellement, cette étape de refroidissement peut également être effectuée après l'étape de séchage de la couche de décor lorsque l'application se fait au rouleau ou par pulvérisation.

Avantageusement, l'étape de refroidissement permet d'éviter un séchage trop rapide de la nouvelle couche et un phénomène de poudrage (le produit liquide séché se présente sous forme de poudre).

Le décor peut être entre deux couches de primaires, sur la dernière couche de primaire.

L'application de la ou des couche(s) de finition peut être réalisé par toute méthode bien connue de l'homme du métier telle que par spray, par rouleau, par sérigraphie, par rideau ou par tampographie.

La cuisson de l'article culinaire est réalisée à une température comprise entre 400 et 450°C, pendant 1 à 15 minutes, préférentiellement entre 410°C et 420°C, à une température comprise entre 2 et 6 minutes.

Dans le cas d'une application par sérigraphie, une étape de séchage est préférentiellement réalisée après l'application à une température comprise entre 45°C et 70°C.

Selon la forme de l'article culinaire qui subit le procédé de fabrication, l'article culinaire peut subir des étapes d'emboutissage et/ou de finition, telles que des étapes de rognage, de soudure et de fixation d'équipements, dans le but d'obtenir un article culinaire fini.

### EXEMPLES

1) Produits
   a) Support en aluminium brossé
   b) Eléments de la couche de primaire :
      i) Polymère fluoré : PTFE en dispersion aqueuse à 60 % d'extrait sec
      ii) Résines polymères : poudres en émulsion aqueuse
      iii) Pigment noir : noir de carbone
   c) -Eléments de la couche de décor :
      i) PTFE en dispersion aqueuse à 60 % d'extrait sec
      ii) PAI poudre en émulsion aqueuse
      iii) Charges :
         (1) Particules d'alumines avec un d50 = 6,5 µm
         (2) Particules d'alumines avec un d50 = 45 µm
         (3) Particules de PEEK avec un d50 = 23 µm
2) Formulations
   a) Couche de primaire (CP)
      i) Polymère fluoré : PTFE à 90 % en poids d'extrait sec
      ii) Résines polymères : 2 % en poids d'extrait sec
      iii) Pigment noir : noir de carbone 5 % en poids sec
      iv) Silice : 3 % en poids sec
   b) Couche de décor 1 (CD1 comprenant des charges d'alumine)
      i) Polymère fluorocarboné : 51 % de PTFE en poids sec par rapport au poids total de la formulation de décor
      ii) Résine polymère : 0,5 % de PAI en poids sec par rapport au poids total de la formulation de décor
      iii) Charges : 25 % d'alumine (d50 = 6,5 µm) en poids sec par rapport au poids total de la formulation de décor
      iv) Paillettes
      v) Pigments
   c) Couche de décor 2 (CD2 comprenant des charges de polyaryléthercétones)
      i) Polymère fluorocarboné : 60 % de PTFE en poids sec par rapport au poids total de la formulation de décor
      ii) Résine polymère : 0,5 % de PAI en poids sec par rapport au poids total de la formulation de décor
      iii) Charges : 25 % de PEEK (d50 = 23 µm) en poids sec par rapport au poids total de la formulation de décor
   d) Couche de décor 3 (CD3 - Sans charges)
      i) Polymère fluorocarboné : PTFE à 60 % en poids sec par rapport au poids total de la formulation de décor
      ii) Résine polymère : 0,5 % de PAI en poids sec par rapport au poids total de la formulation de décor
   e) Couche de décor 4 (CD4 - Sans résine polymère)
      i) Polymère fluorocarboné : 60 % de PTFE en poids sec par rapport au poids total de la formulation de décor
      ii) Charges : 25 % d'alumine (d50 = 6,5 µm) en poids sec par rapport au poids total de la formulation de décor

### TESTS

### Test de glissement d'un article culinaire sur plan incliné

### Matériel

- Système permettant de faire varier l'inclinaison tout en mesurant l'angle à partir de l'horizontale
- Plaque en verre ou grille (matériau sur lequel l'article culinaire est testé) ayant une surface plane
- Poids souple
- Niveau électronique

### Réalisation du test

1) Préparation
   a. La face externe de l'article culinaire est nettoyée et essuyée avec un chiffon sec
   b. Le support (grille ou plaque de verre) est nettoyé et essuyé avec un chiffon sec
   c. Le support est posé sur le système et le niveau est ajusté pour être parfaitement à l'horizontal (angle à 0°)
2) Méthode pour une séquence
   a. Placer l'article à tester au point le plus haut.
   b. Monter progressivement le plateau (2 à 3 secondes par degré).
   c. S'arrêter si on observe un mouvement de l'article (si l'article se déplace de plus de 1 cm on considère qu'il y a glissement).
   d. Contrôler l'angle de glissement avec le niveau.
   e. Répéter l'opération en ralentissant la montée à l'approche de l'angle trouvé plus tôt afin de confirmer.
   f. Noter l'angle trouvé.
3) Test à vide et à froid
   a. Réaliser trois séquences.
4) Test à vide et à chaud (entre 180°C et 200°C)
   a. Réaliser trois séquences

### Test de rayures sur plaque de cuisson en vitrocéramique

Ce test a pour but de caractériser la non-détérioration des plaques de cuisson en vitrocéramiques. Il permet de vérifier qu'un article culinaire ne raye pas la plaque (test réalisé à froid). Ce test s'applique aux articles culinaires compatibles vitrocéramique et induction. Le matériel utilisé comprend l'article culinaire, la plaque vitrocéramique propre et sans rayure, et un poids de 100 g.

Le poids de 100g est placé au centre de l'article culinaire et ce dernier est disposé sur la plaque en vitrocéramique. L'article culinaire est ensuite déplacé horizontalement sur la plaque d'un point A à un point B, puis du point B à un point C (les points ABC formant un triangle), pendant 10 cycles.

L'état de la plaque vitrocéramique est vérifié et la présence éventuelle de rayures est notée.

### Exemple 1 (selon l'invention)

Les compositions de primaire, de décor et de finition sont préparées selon les formulations décrites ci-dessus.
1) Un flan en aluminium ayant subi brossage, est revêtu par sérigraphie d'une couche de primaire continue sur l'ensemble de sa face externe, avec la composition de primaire CP préparée au préalable ;
2) Une couche de décor discontinue, est appliquée par sérigraphie au centre de la face externe du flan sur la couche de primaire, représentant 30 % de la surface finale de la face externe du fond de l'article culinaire, avec la composition de décor CD1 préparée au préalable ;
3) Cuisson au four du flan recouvert de ces superpositions de couches à une température de 415°C pendant 3 minutes.
4) Etape de microbillage sur la face externe du flan pour atténuer la rugosité de la couche de décor ;
5) Emboutissage.

### Exemple 2 (selon l'invention)

L'exemple 2 est identique à l'exemple 1, excepté que le flan en aluminium est remplacé par un article culinaire préformé avec un support en aluminium sablé et que les différentes couches ont été appliquées par spray.

### Exemple 3 (selon l'invention)

L'exemple 3 est identique à l'exemple 1, excepté que la composition de décor CD2 est utilisée, comprenant des charges de PEEK et qu'il n'y a pas d'étape de microbillage.

### Exemple 4 (comparatif - sans charges)

L'exemple 4 est identique à l'exemple 1, excepté que la composition de décor CD3 est utilisée.

### Exemple 5 (comparatif - sans résine polymère)

L'exemple 5 est identique à l'exemple 1, excepté que la composition de décor CD4 est utilisée.

### Exemple 6 (comparatif - Surface de décor < 20 %)

L'exemple 6 est identique à l'exemple 1, excepté que la composition de décor CD1 est appliquée seulement sur 15 % de la surface de la face externe de la paroi de fond.

### Exemple 7 (comparatif - quantité de charges < 5 %)

L'exemple 7 est identique à l'exemple 1, excepté que la composition de décor CD1 ne comprend que 4 % en poids de charges d'alumine.

### Exemple 8 (comparatif - charges d'alumine avec d50 > 25 um)

L'exemple 8 est identique à l'exemple 1, excepté que la composition de décor CD1 comprend 25 % de charges d'alumines ayant un d50 = 45 µm.

Les articles culinaires décrits ci-dessus sont testés pour le glissement et la rayure sur plaque de cuisson, selon les protocoles décrits ci-dessus

### Résultats

| Exemples | Angle d'inclinaison mesuré | Rayures sur la plaque |
|---|---|---|
| 1 | 11° | Marques très fines qui disparaissent après nettoyage |
| 2 | 13° | Marques très fines qui ne disparaissent pas après nettoyage |
| 3 | 11° | Marques très fines qui disparaissent après nettoyage |
| 4 | 4° | Rayures non visibles |
| 5 | 11° | Résidus charges (tâchage) et rayures profondes |
| 6 | 50 | Rayures très fines et nettoyables |
| 7 | 4° | Rayures non visibles |
| 8 | 16° | Rayures profondes |

D'après ces résultats, on observe que les articles culinaires ayant une couche de décor dépourvue de charges (exemple 4) ou avec une quantité de charges inférieure à 5 % (exemple 7) ou ayant une surface de décor inférieure à 20 % de la face externe de la paroi de fond (exemple 6), ont un angle d'inclinaison très faible en comparaison aux angles obtenus par les articles culinaires selon l'invention (exemples 1 à 3).

Aussi, on observe que les articles culinaires présentant une couche de décor dépourvue de résine polymère (exemple 5) ou bien contenant des charges ayant un d50 > 25 microns (exemple 8), ont un angle d'inclinaison important mais entrainent de profondes rayures sur les plaques de cuisson en vitrocéramique voire un tâchage des plaques (exemple 8), en comparaison aux articles culinaires selon l'invention (exemples 1 à 3).

## Revendications

1. Article culinaire (1) comprenant un support (2) présentant une paroi de fond (21) et une paroi latérale (31) s'élevant autour de la paroi de fond (21), ladite paroi de fond (21) présentant une face interne (211) destinée à recevoir des aliments et une face externe (212) destinée à être disposée à proximité d'une source de chaleur et ladite paroi latérale (31) présentant une face interne (311) et une face externe (312), dans lequel:
- les faces externes (212) et (312) sont recouvertes d'au moins une couche primaire continue comprenant au moins un polymère fluorocarboné ;
- le revêtement de la face externe (212) comprend, agencé entre ou dans ses couches, au moins un décor représentant au moins 20% de la surface de la face externe (212), lequel décor comprend :
- au moins un polymère fluorocarboné ;
- au moins une résine polymère ;
- entre 5 et 25% en poids de charges minérales et/ou de charges polymères, sous forme de particules de taille d50 inférieure à 25 µm.

2. Article culinaire (1) selon la revendication 1, **caractérisé en ce que** la résine polymère est choisie parmi les polyamides imides (PAI).

3. Article culinaire (1) selon les revendications 1 ou 2, **caractérisé en ce que** la proportion de résine(s) polymère(s) dans la couche de décor est comprise entre 0,5 % et 3 %, de préférence entre 1 % et 1,5 %, en poids sec par rapport au poids total de ladite couche de décor.

4. Article culinaire (1) selon l'une des revendications précédentes, **caractérisé en ce que** les charges ont une dureté sur l'échelle de Mohs inférieure ou égale à 5,5.

5. Article culinaire (1) selon l'une des revendications précédentes, **caractérisé en ce que** les charges minérales sont sélectionnées parmi le verre, l'inox, l'alumine, le nitrure de bore, le talc, le kaolin, ou leurs mélanges.

6. Article culinaire (1) selon l'une des revendications précédentes, **caractérisé en ce que** les charges polymères sont sélectionnées parmi les polyaryléthercétones, les polyimides, les polysulfures de phénylène et leurs mélanges.

7. Article culinaire (1) selon l'une quelconque des revendications précédentes, **caractérisé en ce que** le support comprend au moins un élément choisi parmi une céramique, un verre, un stellite, un alliage métallique ou un métal, notamment l'aluminium, le cuivre, le titane ou le zirconium.

8. Article culinaire (1) selon l'une quelconque des revendications précédentes, **caractérisé en ce que** les charges minérales ou les charges polymères sont de forme sphérique.

9. Article culinaire (1) selon l'une quelconque des revendications précédentes, **caractérisé en ce que** les charges minérales et/ou les charges polymères, ont un d50 supérieur à 5 µm.

10. Article culinaire (1) selon l'une quelconque des revendications précédentes, **caractérisé en ce que** le décor comprend entre 10 et 20% de charges minérales et/ou de charges polymères.

11. Procédé de fabrication d'un article culinaire comprenant un support (2) présentant une paroi de fond (21) et une paroi latérale (31) s'élevant autour de la paroi de fond (21), ladite paroi de fond (21) présentant une face interne (211) destinée à recevoir des aliments et une face externe (212) destinée à être disposée à proximité d'une source de chaleur et ladite paroi latérale (31) présentant une face interne (311) et une face externe (312), ledit procédé comprenant les étapes suivantes :
- Fourniture d'un support (2) ;
- Application d'au moins une couche de primaire comprenant au moins un polymère fluorocarboné, sur les faces externes (212) et (312) du support (2) ;
- Application sur au moins 20 % de la surface de la face externe (212) d'au moins un décor comprenant au moins un polymère fluorocarboné, au moins une résine polymère et 5 à 25 % en poids de charges minérales et/ou de charges polymères, sous forme de particules de taille d50 inférieure à 25 µm ;
- Cuisson dudit article culinaire au four à une température comprise entre 400 et 450°C, pendant 1 à 15 min.

12. Procédé selon la revendication 11, **caractérisé en ce que** le décor est appliqué par sérigraphie, au rouleau, par spray, par tampographie ou par rideau.

13. Procédé selon l'une quelconque des revendications 11 ou 12, **caractérisé en ce que** le décor est appliqué sur la dernière couche primaire ou entre deux couches primaires.

## Patentansprüche

1. Küchenartikel (1), umfassend einen Träger (2), der eine Bodenwand (21) und eine Seitenwand (31) aufweist, die sich um die Bodenwand (21) herum erhebt, wobei die Bodenwand (21) eine innere Fläche (211) aufweist, die bestimmt ist, Nahrungsmittel aufzunehmen, und eine äußere Fläche (212), die bestimmt ist, in der Nähe einer Wärmequelle angeordnet zu sein und die Seitenwand (31) eine innere Fläche (311) und eine äußere Fläche (312) aufweist, wobei:
- die äußeren Flächen (212) und (312) mit mindestens einer kontinuierlichen Primärschicht bedeckt sind, die mindestens ein Fluorkohlenstoffpolymer umfasst;
- die Beschichtung der äußeren Fläche (212), die zwischen oder in ihren Schichten eingerichtet iat, mindestens ein Dekor umfasst, das mindestens 20 % der Oberfläche der äußeren Fläche (212) darstellt, wobei das Dekor umfasst:
- mindestens ein Fluorkohlenstoffpolymer;
- mindestens ein Polymerharz;
- zwischen 5 und 25 Gew.-% mineralische Füllstoffe und/oder polymere Füllstoffe in Form von Partikeln mit einer Größe d50 von weniger als 25 µm.

2. Küchenartikel (1) nach Anspruch 1, **dadurch gekennzeichnet, dass** das Polymerharz aus den Polyamidimiden (PAI) ausgewählt ist.

3. Küchenartikel (1) nach Anspruch 1 oder 2, **dadurch gekennzeichnet, dass** der Anteil an Polymerharz(en) in der Dekorschicht zwischen 0,5 % und 3 %, vorzugsweise zwischen 1% und 1,5 % Trockengewicht, bezogen auf das Gesamtgewicht der Dekorschicht, liegt.

4. Küchenartikel (1) nach einem der vorhergehenden Ansprüche, **dadurch gekennzeichnet, dass** die Füllstoffe eine Härte auf der Mohs-Skala von 5,5 oder weniger aufweisen.

5. Küchenartikel (1) nach einem der vorhergehenden Ansprüche, **dadurch gekennzeichnet, dass** die mineralischen Füllstoffe aus Glas, Edelstahl, Aluminiumoxid, Bornitrid, Talkum, Kaolin oder deren Mischungen ausgewählt sind.

6. Küchenartikel (1) nach einem der vorhergehenden Ansprüche, **dadurch gekennzeichnet, dass** die polymeren Füllstoffe aus Polyaryletherketonen, Polyimiden, Polyphenylensulfiden und deren Mischungen ausgewählt sind.

7. Küchenartikel (1) nach einem der vorhergehenden Ansprüche, **dadurch gekennzeichnet, dass** der Träger mindestens ein Element umfasst, das aus einer Keramik, einem Glas, einem Stellit, einer Metalllegierung oder einem Metall, insbesondere Aluminium, Kupfer, Titan oder Zirkonium, ausgewählt ist.

8. Küchenartikel (1) nach einem der vorhergehenden Ansprüche, **dadurch gekennzeichnet, dass** die mineralischen Füllstoffe oder die polymeren Füllstoffe kugelförmig sind.

9. Küchenartikel (1) nach einem der vorhergehenden Ansprüche, **dadurch gekennzeichnet, dass** die mineralischen Füllstoffe und/oder die polymeren Füllstoffe einen d50 von über 5 µm. aufweisen.

10. Küchenartikel (1) nach einem der vorhergehenden Ansprüche, **dadurch gekennzeichnet, dass** das Dekor zwischen 10 und 20 % mineralische Füllstoffe und/oder polymere Füllstoffe umfasst.

11. Verfahren zur Herstellung eines Küchenartikels, umfassend einen Träger (2), der eine Bodenwand (21) und eine Seitenwand (31) aufweist, die sich um die Bodenwand (21) herum erhebt, wobei die Bodenwand (21) eine innere Fläche (211) aufweist, die bestimmt ist, Nahrungsmittel aufzunehmen, und eine äußere Fläche (212), die bestimmt ist, in der Nähe einer Wärmequelle angeordnet zu sein und die Seitenwand (31) eine innere Fläche (311) und eine äußere Fläche (312) aufweist, wobei das Verfahren die folgenden Schritte umfasst:
- Bereitstellen eines Trägers (2);
- Aufbringen von mindestens einer Primärschicht, die mindestens ein Fluorkohlenstoffpolymer umfasst, auf die äußeren Flächen (212) und (312) des Trägers (2);
- Aufbringen auf mindestens 20 % der Oberfläche der äußeren Fläche (212) von mindestens einem Dekor, das mindestens ein Fluorkohlenstoffpolymer, mindestens ein Polymerharz und 5 bis 25 Gew.-% mineralische Füllstoffe und/oder polymere Füllstoffe in Form von Partikeln mit einer Größe d50 von weniger als 25 µm umfasst;
- Brennen des Küchenartikels im Ofen bei einer Temperatur zwischen 400 und 450 °C während 1 bis 15 min.

12. Verfahren nach Anspruch 11, **dadurch gekennzeichnet, dass** das Dekor durch Siebdruck, Rollen, Spray, Tampondruck oder als Vorhang aufgebracht wird.

13. Verfahren nach einem der Ansprüche 11 oder 12, **dadurch gekennzeichnet, dass** das Dekor auf die letzte Primärschicht oder zwischen zwei Primärschichten aufgebracht wird.

## Claims

1. A culinary article (1) comprising a support (2) having a bottom wall (21) and a side wall (31) rising around the bottom wall (21), said bottom wall (21) having an inner face (211) intended to receive food and an outer face (212) intended to be disposed close to a heat source and said side wall (31) having an inner face (311) and an outer face (312), wherein:
- the outer faces (212) and (312) are covered with at least one continuous primer layer comprising at least one fluorocarbon polymer;
- the coating of the outer face (212) comprises, arranged between or in its layers, at least one decoration representing at least 20% of the surface of the outer face (212), which decoration comprises:
at least one fluorocarbon polymer;
at least one polymer resin;
between 5 and 25% by weight of mineral fillers and/or polymer fillers, in the form of particles of d50 size less than 25 µm.

2. The culinary article (1) according to claim 1, **characterized in that** the polymer resin is selected from polyamide imides (PAI).

3. The culinary article (1) according to claims 1 or 2, **characterized in that** the proportion of polymer resin(s) in the decoration layer is comprised between 0.5% and 3%, preferably between 1% and 1.5%, by dry weight relative to the total weight of said decoration layer.

4. The culinary article (1) according to one of the preceding claims, **characterized in that** the fillers have a hardness on the Mohs scale less than or equal to 5.5.

5. The culinary article (1) according to one of the preceding claims, **characterized in that** the mineral fillers are selected from glass, stainless steel, alumina, boron nitride, talc, kaolin, or mixtures thereof.

6. The culinary article (1) according to one of the preceding claims, **characterized in that** the polymer fillers are selected from polyaryletherketones, polyimides, polyphenylene sulphides and mixtures thereof.

7. The culinary article (1) according to any one of the preceding claims, **characterized in that** the support comprises at least one element selected from a ceramic, a glass, a stellite, a metal alloy or a metal, in particular aluminum, copper, titanium or zirconium.

8. The culinary article (1) according to any one of the preceding claims, **characterized in that** the mineral fillers or the polymer fillers are of spherical shape.

9. The culinary article (1) according to any one of the preceding claims, **characterized in that** the mineral fillers and/or the polymer fillers have a d50 greater than 5 µm.

10. The culinary article (1) according to any one of the preceding claims, **characterized in that** the decoration comprises between 10 and 20% of mineral fillers and/or polymer fillers.

11. A method of manufacturing a culinary article comprising a support (2) having a bottom wall (21) and a side wall (31) rising around the bottom wall (21), said bottom wall (21) having an inner face (211) intended to receive food and an outer face (212) intended to be disposed close to a heat source and said side wall (31) having an inner face (311) and an outer face (312), said method comprising the following steps:
- Providing a support (2);
- Applying of at least one primer layer comprising at least one fluorocarbon polymer, on the outer faces (212) and (312) of the support (2);
- Applying on at least 20% of the surface of the outer face (212) of at least one decoration comprising at least one fluorocarbon polymer, at least one polymer resin and 5 to 25% by weight of mineral fillers and/or polymer fillers, in the form of particles of d50 size less than 25 µm;
- Curing said culinary article in the oven at a temperature comprised between 400 and 450°C, for 1 to 15 min.

12. The method according to claim 11, **characterized in that** the decoration is applied by screen printing, by roller, by spray, by pad printing or by curtain.

13. The method according to any one of claims 11 or 12, **characterized in that** the decoration is applied on the last primer layer or between two primer layers.
